Europäisches Patentamt

(19) European Patent Office

Office européen des brevets

(11) Numéro de publication: **0 186 596**
**B1**

(12) **FASCICULE DE BREVET EUROPEEN**

(45) Date de publication du fascicule du brevet: **18.07.90**

(51) Int. Cl.⁵: **G 05 D 3/18, G 05 B 11/16**

(21) Numéro de dépôt: **85402601.0**

(22) Date de dépôt: **23.12.85**

(54) **Système de commande de déplacement linéaire comprenant un moteur à courant continu.**

(30) Priorité: **26.12.84 FR 8419804**

(43) Date de publication de la demande:
**02.07.86 Bulletin 86/27**

(45) Mention de la délivrance du brevet:
**18.07.90 Bulletin 90/29**

(84) Etats contractants désignés:
**DE IT SE**

(56) Documents cités:
**DE-A-3 021 063     FR-A-2 540 647**
**FR-A-1 369 512     US-A-4 177 412**

**E.D.N. ELECTRICAL DESIGN NEWS, vol. 28, no.
10, mai 1983, pages 195-206, Boston,
Massachusetts, US; J. WILLIAMS et al.: "Use
motor-drive IC to solve tricky design problems"
Livre de W.Oppelt,"Kleines Handbuch
technischer Regelungen",paru au "Verlag
Chemie",Weinheim/RFA,pages 589-591;596-606
et 614-615**

(73) Titulaire: **VALEO VISION**
**17, rue Henri Gautier**
**F-93012 Bobigny Cédex (FR)**

(72) Inventeur: **Leleve, Joel**
**7, Villa Renée**
**F-93800 Epinay-sur-Seine (FR)**

(74) Mandataire: **Martin, Jean-Jacques et al
Cabinet REGIMBEAU 26, Avenue Kléber
F-75116 Paris (FR)**

## Description

La présente invention est relative à un système de commande de déplacement linéaire comprenant un moteur à courant continu commandé dans une boucle d'asservissement de position tel qu'indiqué dans le préambule de la revendication 1.

La commande de moteurs à courant continu en particulier de moteurs alimentés sous faible tension, tels que les moteurs utilisés dans les équipements pour automobiles a déjà fait l'objet de plusieurs publications, notamment de brevets. La demande de brevet français 83 01748 par exemple, décrit un pilotage en position d'un embrayage dans lequel le déplacement de l'élément mobile est effectué par commande par impulsions à fréquence de récurrence fonction de la vitesse du moteur. Le brevet français 1 369 512 concerne un système dans lequel la cadence et la largeur des impulsions peut s'adapter en fonction d'une tension d'erreur telle que erreur sur la vitesse, une réaction de vitesse étant ainsi produite.

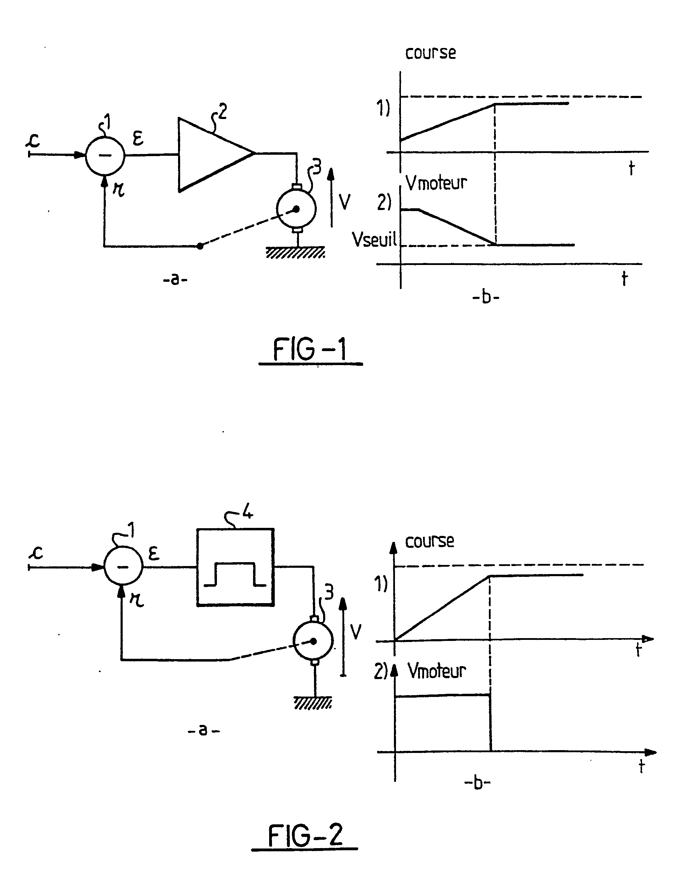

Les dispositifs précités restent soumis cependant aux contraintes d'utilisation spécifiques aux moteurs à courant continu habituellement utilisés dans les asservissements de positions qui seront décrits ci-après en liaison avec les figures 1 et 2 relatives aux solutions classiques utilisées habituellement pour ce type de moteurs. Les moteurs électriques habituellement utilisés pour ces types d'asservissement sont caractérisés par un couple et une vitesse de rotation élevés.

La commande électronique d'un servo-moteur peut habituellement être réalisée soit en mode proportionnel ou en mode tout ou rien.

Dans la commande en mode proportionnel ainsi que représenté figures 1a et 1b, la tension fournie au moteur 3 est inversement proportionnelle à l'écart $\Sigma$ entre la position instantanée de l'arbre du moteur donnée par exemple par un système de recopie $r$ et la position théorique finale de l'arbre représentée par un signal de consigne $c$, la tension appliquée au moteur 3 étant engendrée au moyen d'un circuit soustracteur 1 et si nécessaire d'un circuit amplificateur 2. Sur la figure 1b, on voit que la tension effectivement appliquée au moteur décroît avec la course effective de l'arbre moteur pour s'arrêter à une tension de seuil notée $V_{seuil}$.

La commande en mode proportionnel est connue pour permettre une bonne précision d'arrêt de l'arbre moteur en position ainsi qu'un arrêt en douceur de celui-ci. Cependant, elle présente les inconvénients d'un mauvais rendement dû à la puissance électrique dissipée dans les circuits électroniques et surtout de l'existence d'un courant permanent, dans le moteur, sur une position d'arrêt, courant dû à la tension de seuil du moteur qui a pour effet d'entraîner une dissipation permanente dans les circuits de commande. Ce phénomène présente le risque d'un emballement thermique et de disjonction des circuits.

Dans la commande en mode tout ou rien ainsi que représenté en figures 2a et 2b, l'application d'une tension ou signal de consigne ou de commande $c$ sur l'entrée du soustracteur 1 a pour effet d'engendrer en sortie de ce dernier une tension d'erreur $\Sigma$ capable à son tour de déclencher un générateur 4 capable de délivrer une tension continue directement appliquée au moteur. La tension moteur $V_{moteur}$ passe alors brutalement du maximum à zéro quand la position instantanée du signal de recopie $r$, représentatif de la position de l'arbre moteur, est proche de la position théorique. Sur la figure 2b, la tension effectivement appliquée au moteur et la course de l'arbre de ce dernier sensiblement représentée par le signal de réplique $r$ sont représentées.

La commande en mode tout ou rien contrairement à la commande en mode proportionnel présente l'avantage d'une absence de risque de disjonction thermique en raison de l'absence de courant à travers le moteur sur une position d'arrêt de celui-ci. Cependant, la précision d'arrêt du moteur et donc de l'asservissement de position est moins bonne que dans le mode proportionnel et le fonctionnement brutal et saccadé présente un risque d'instabilité de position si l'on souhaite avoir une erreur de position pratique d'arrêt par rapport à la position d'arrêt théorique, compatible avec les exigences habituelles en ce domaine.

La présente invention a pour but de remédier aux inconvénients précités par la mise en oeuvre d'un système de commande de déplacement linéaire pour moteur à courant continu dans lesquels les inconvénients de la commande en mode proportionnel et de la commande en mode tout ou rien sont supprimés.

Pour arriver à ce but, ledit système de commande est pourvu de moyens indiqués par la partie caractérisante de la revendication 1. Dans cette solution, le moteur est commandé par une suite d'impulsions à rapport cyclique variable dont la valeur moyenne est proportionnelle à l'écart entre la position instantanée de l'arbre du moteur et la position d'arrêt du moteur en position finale théorique. Ce principe de régulation discontinue est connu en soi du document DE—A—3021063, où il est réalisé par une régulation à trois points. L'invention applique ce principe par une boucle de régulation à deux points agissant sur un ensemble mécanique (engrenages etc.) approprié.

Le dispositif de commande d'un moteur à courant continu de l'invention comporte dans la chaîne directe de commande du moteur des moyens générateurs d'une suite d'impulsions à rapport cyclique variable destinées à partir du signal d'erreur à assurer la commande directe du moteur.

Les impulsions délivrées par les moyens générateurs ont une valeur résultante moyenne proportionnelle à l'écart entre la position instantanée de l'arbre du moteur et la position d'arrêt du moteur en position finale théorique.

L'invention trouve application dans le domaine de l'automobile, notamment pour la commande de l'orientation des phares d'éclairage de ces derniers. Elle trouve également application dans tout domaine dans lequel une orientation de projecteur ou de réflecteur, orientation de grande précision, est nécessaire, et en particulier dans le domaine spatial pour l'orientation de réflecteurs ou antennes de satellites artificiels.

L'invention sera mieux comprise à la lecture de la description ci-après et à l'observation des dessins dans lesquels outre les figures 1 et 2 relatives à la commande utilisée dans la technique antérieure, les figures 3a et 3b représentent un schéma synoptique illustratif du procédé et du dispositif de commande de l'invention ainsi que des graphiques représentatifs de la course de l'arbre du moteur et des signaux de commande appliqués à celui-ci,

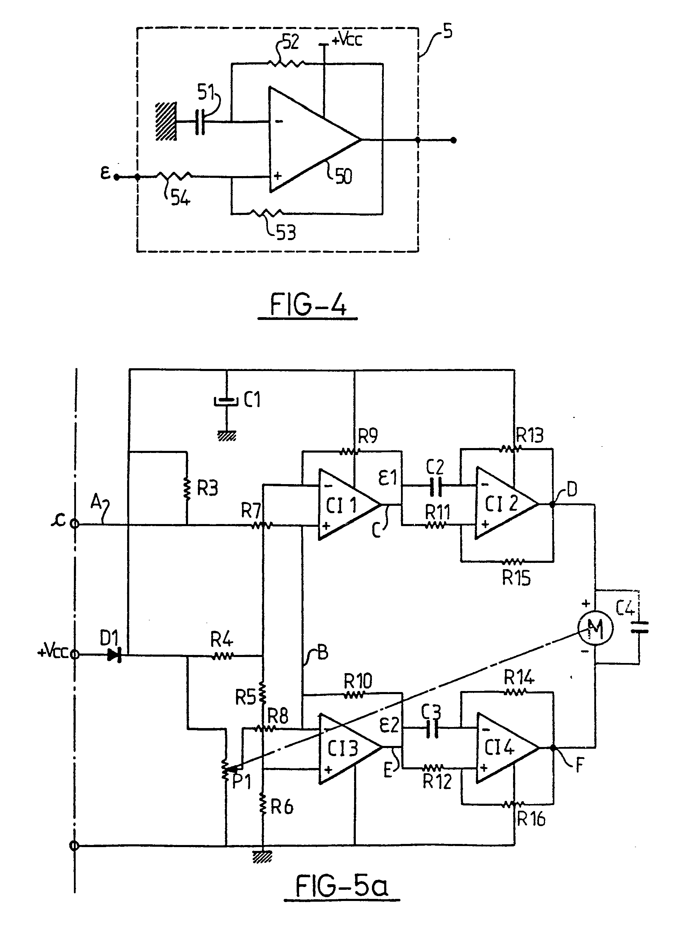

la figure 4 représente un mode de réalisation particulier d'un générateur d'impulsions capable de délivrer des impulsions à rapport cyclique variable;

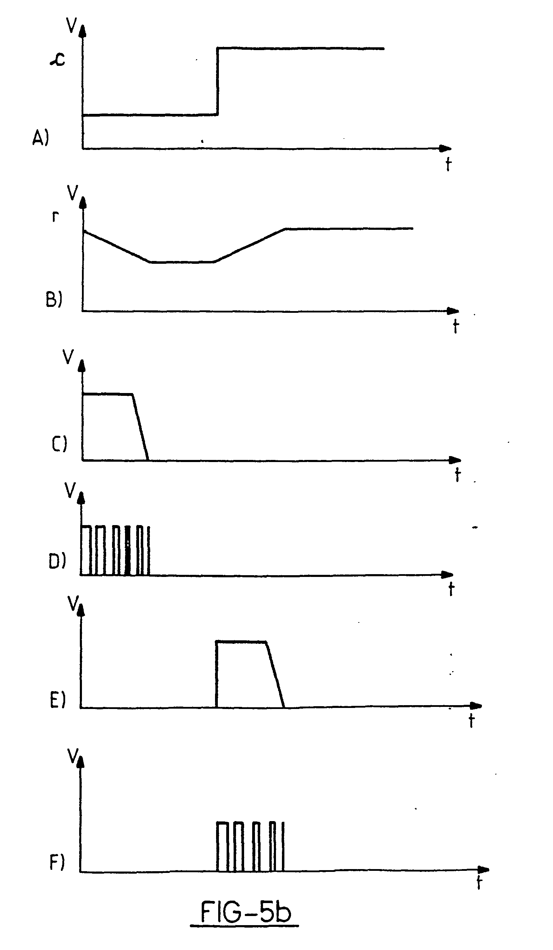

la figure 5a représente un mode de réalisation préférentiel d'un système de commande conforme à l'invention, particulièrement adapté à une commande de position aller-retour du moteur et la figure 5b représente les différentes formes d'onde relevées au point de test correspondant du dispositif représenté à la figure 5a,

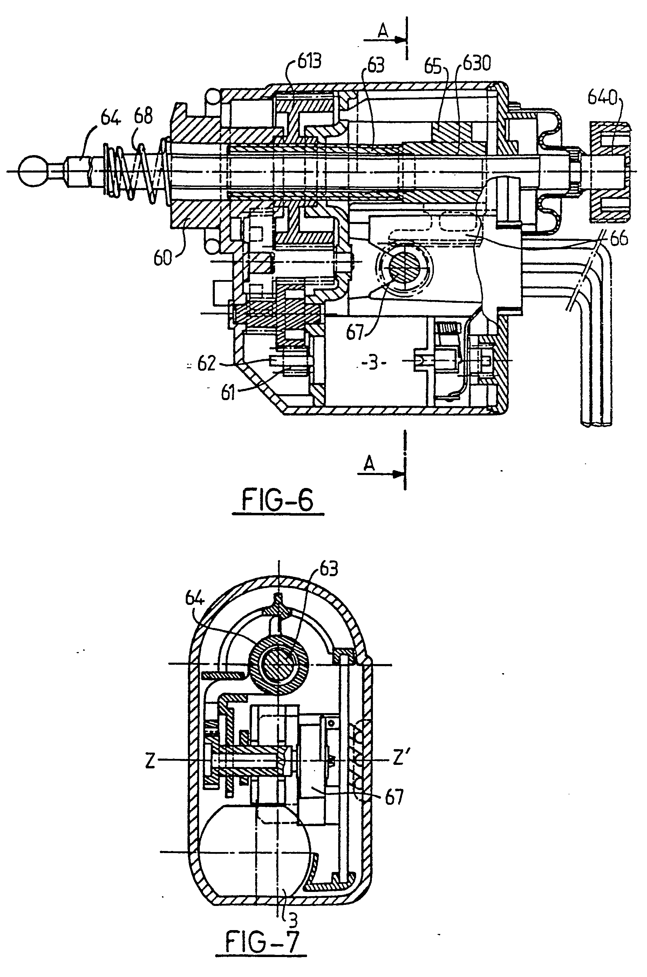

la figure 6 représente en coupe longitudinale un système complet de commande de déplacement linéaire de précision conformément à l'invention,

la figure 7 représente selon une coupe transversale, le système de commande de déplacement linéaire, tel que représenté en figure 6.

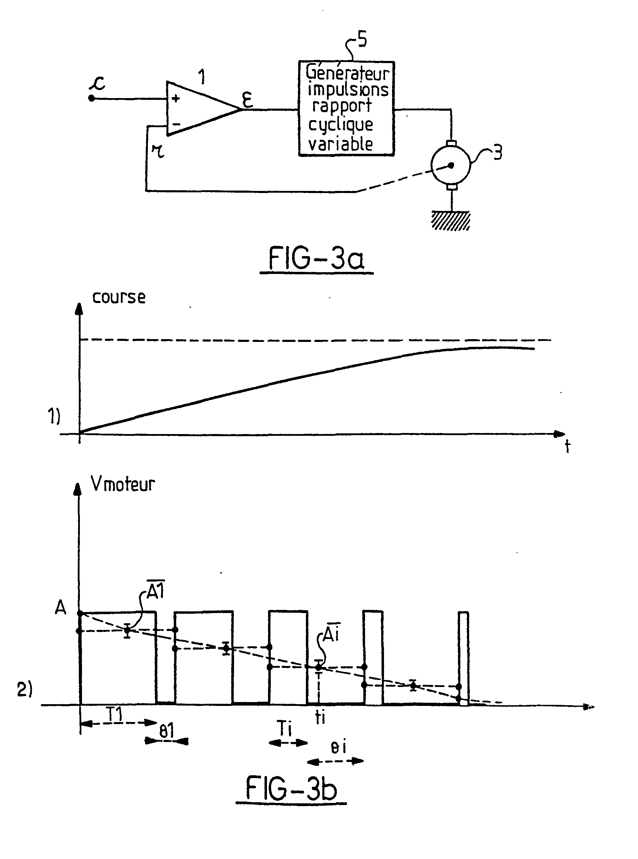

Le procédé de commande d'un moteur à courant continu d'une boucle d'asservissement de position sera maintenant décrit en liaison avec les figures 3a et 3b (1, 2). Selon la figure 3a, le signal d'erreur de position est engendré au moyen d'un dispositif soustracteur 1 à partir d'un signal de consigne ou de commande et d'un signal de recopie $r$ représentatif de la position de l'arbre du moteur 3. Sur la figure 3a, le système de recopie est représenté par une liaison mécanique indiquée en trait discontinu schématisant la commande d'un potentiomètre par exemple. Le moteur 3 est commandé par une suite d'impulsions à rapport cyclique variable dont la valeur moyenne de l'amplitude est sensiblement proportionnelle à l'écart entre la position instantanée de l'arbre du moteur et la position d'arrêt du moteur en position finale théorique. La position instantanée de l'arbre du moteur est donnée par le signal de recopie $r$, et la position d'arrêt du moteur en position finale théorique est représentée par le signal de consigne $c$. Les impulsions à rapport cyclique variable sont délivrées par un générateur d'impulsions 5 recevant sur une entrée le signal d'erreur $\Sigma$ et délivrant sur une borne de sortie les impulsions appliquées sur une borne d'induit du moteur. Ainsi qu'il apparaît en figure 3b2, les impulsions de commande ont une durée Ti pour toute impulsion d'ordre i proportionnelle à la valeur du signal d'erreur $\Sigma$. De

manière non limitative, les impulsions de commande ont chacune même amplitude. L'intervalle de temps entre deux impulsions successives, intervalle de temps $\theta i$ entre deux impulsions successives d'ordre i et d'ordre i+1, est inversement proportionnel à la tension moyenne appliquée au moteur 3. De manière préférentielle, les impulsions successives ont même fréquence de récurrence. Ainsi que représenté en figure 3b2, l'échelle des temps étant cependant fortement dilatée en vue de permettre une représentation claire de la forme d'onde effectivement appliquée comme signal de commande du moteur, le lieu des points $\overline{A}_i$ représentatifs de la valeur moyenne de l'impulsion d'ordre i à l'instant $t_i$ milieu de la récurrence d'ordre i reconstitue sensiblement la forme d'onde de tension appliquée au moteur 3 en commande en mode proportionnel tel que représenté figure 1b2 sensiblement. Cependant, la tension effectivement appliquée au moteur est constituée d'une suite d'impulsions par tout ou rien, le procédé de commande de l'invention permettant ainsi de cumuler les avantages de la commande proportionnelle et de la commande en mode tout ou rien bien que ne présentant pas leurs inconvénients. On comprendra en effet, qu'au départ le moteur en phase de grande vitesse fonctionne pratiquement selon un fonctionnement normal continu en mode proportionnel, du fait de l'intégration des impulsions par le moteur, alors qu'au contraire, lorsque la vitesse décroît le mode de fonctionnement se modifie pour arriver à une phase de démarrages successifs du moteur sous un couple maximum associé à un déplacement faible de l'arbre de ce dernier.

Un mode de réalisation particulier des moyens générateurs d'impulsions à rapport cyclique variable sera maintenant décrit en liaison avec la figure 4. Ces moyens générateurs d'impulsions sont de préférence constitués par un oscillateur du type oscillateur à relaxation capable de délivrer une suite d'impulsions à rapport cyclique variable, telles que la durée de chaque impulsion est proportionnelle à la valeur du signal d'erreur, l'intervalle de temps entre deux impulsions successives étant inversement proportionnel à la tension moyenne appliquée au moteur. Un type d'oscillation particulièrement adapté comporte un comparateur 50 dont une première entrée positive reçoit le signal d'erreur $\Sigma$ et dont une deuxième entrée négative, est reliée à une capacité 51 capable par charge et décharge successive d'engendrer des oscillations de relaxation. Une boucle de réaction 53 de la sortie du comparateur 50 sur l'entrée positive et une boucle de contre-réaction 52 de la sortie du comparateur 50 sur l'entrée négative permettent d'assurer respectivement la proportionalité inverse de l'intervalle de temps entre deux impulsions successives à la tension moyenne appliquée au moteur et la proportionalité de la durée de chaque impulsion à la valeur du signal d'erreur. A titre d'exemple, le comparateur 50 peut être constitué par un amplificateur opérationnel. Sur la figure 4, la borne du condensateur 51 non connectée à l'entrée négative du comparateur a été représentée connectée à la tension de référence. En raison du caractère lentement variable du signal d'erreur Σ par rapport à la constante de temps de charge et de décharge de la capacité 51 et des circuits connexes, cette borne peut par exemple être reliée à la borne d'entrée du signal d'erreur Σ pour seule raison de commodité pratique de réalisation des circuits. Les circuits de réaction et de contre-réaction 53, 52 sont réalisés par des éléments résistifs.

Un mode de réalisation préférentiel d'un dispositif de commande adapté à la commande aller-retour d'un moteur à courant continu conformément à l'invention sera en outre décrit conformément à la figure 5a en relation avec les formes d'onde relevées aux différents points de test du dispositif. Le dispositif comprend une première chaîne de commande comprenant en cascade un premier comparateur $Cl_1$ susceptible d'engendrer un premier signal d'erreur $Σ_1$ par rapport à un signal de consigne $c$ et un deuxième comparateur $Cl_2$ fonctionnant en oscillateur à rapport cyclique variable dont la sortie est directement reliée à une des bornes d'induit du moteur. Une deuxième chaîne de commande comprend également en cascade un troisième comparateur $Cl_3$ susceptible d'engendrer un deuxième signal d'erreur $Σ_2$ par rapport au même signal de commande C et un quatrième comparateur $C_4$ fonctionnant en oscillateur à rapport cyclique variable dont la sortie est directement reliée à l'autre borne d'induit du moteur. Un circuit d'alimentation $D_1$, $C_1$ permet une alimentation de l'ensemble du dispositif en une tension continue Vcc déterminée. Dans le cas de l'application à la commande de projecteur d'automobile la tension Vcc est par exemple la tension de batterie de l'automobile, soit 12 volts. Un circuit de polarisation représenté sur la figure 5a par les résistances $R_4$, $R_5$, $R_6$ permet d'engendrer une tension continue de valeur sensiblement égale à la moitié de la tension d'alimentation. Cette tension de polarisation est délivrée à l'entrée négative et positive respectivement du premier et du troisième comparateurs. Un circuit de recopie représenté en figure 5a par le potentiomètre $P_1$ mécaniquement relié au moteur 3 par la liaison symbolisée en trait mixte délivre à l'entrée positive respectivement négative du premier et du troisième comparateur un signal représentatif de la position de l'arbre moteur. Les différentes formes d'onde représentées en figure 5b A, B, C, D, E, F permettent de comprendre le fonctionnement du dispositif.

Le signal de consigne $c$, par exemple appliqué en A, est par exemple un saut négatif de tension de valeur comprise entre 12 volts et zéro par exemple. Le signal de recopie $r$ représenté au point B est appliqué à l'entrée positive respectivement négative du premier et du troisième comparateurs. La phase descendante du signal de recopie $r$ provoque l'apparition du signal d'erreur $Σ_1$ en C en sortie du comparateur 1 et simultanément une série d'impulsions à rapport cyclique variable en D à la sortie du comparateur $Cl_2$ lesquelles sont appliquées au moteur et provoquent la rotation de celui-ci dans un premier sens. La position d'équilibre du moteur étant atteinte, le signal de recopie $r$ ayant atteint sa phase statique horizontale représentée en figure 5bD, toute nouvelle modification du signal de consigne $c$ représentée par exemple par un retour à la valeur d'origine de ce signal en figure 5bA provoque l'apparition d'un signal d'erreur $Σ_2$ en sortie 2 du comparateur $Cl_3$ et en conséquence l'apparition d'impulsions à rapport cyclique variable en F à la sortie du comparateur $Cl_4$, lesquelles appliquées au moteur 3, provoquent la rotation du moteur en sens opposé pour le retour à sa position initiale. Afin d'assurer un arrêt stable et définif du moteur, une résistance $R_5$ de faible valeur est insérée dans le pont de résistance $R_4$, $R_6$ destiné à engendrer la tension dite de polarisation égale à la moitié de la tension d'alimentation sensiblement. Cette résistance $R_5$ de faible valeur à pour effet d'engendrer un décalage sur la valeur de la tension de polarisation, décalage qui constitue en fait un seuil d'hystérésis pour la tension d'erreur. On comprendra que lorsque le moteur atteint sa position d'arrêt aux incertitudes de positions et de conversion des différents transducteurs utilisés pour engendrer le signal de recopie, tout signal d'erreur inférieur à cette valeur de seuil a pour effet de ramener la tension de sortie soit du comparateur $Cl_1$, soit du comparateur $Cl_2$ à zéro et donc de provoquer l'arrêt des oscillateurs de relaxation constitués par les comaprateurs $Cl_2$ et $Cl_4$. Il faut ajouter que dans le schéma de la figure 5a, les résistances notées $R_{13}$, $R_{14}$ et $R_{15}$, $R_{16}$ jouent respectivement le rôle des circuits de contre-réaction 52 et de réaction 53 de l'oscillateur à relaxation représenté en figure 4.

Afin de bénéficier de tous les avantages de précision de commande apportés par le dispositif de commande de l'invention précédemment décrit, il a été nécessaire de mettre en oeuvre un système mécanique correspondant capable de conserver les qualités de précision précitées. Ce système mécanique sera de préférence décrit en liaison avec les figures 6 et 7 dans le cas d'un système de commande de déplacement linéaire de précision.

Selon la figure 6, le système comprend bien entendu, un moteur 3 à courant continu commandé conformément au procédé de l'invention. Ce système comprend dans un corps de système 60 un train d'engrenages 61 en prise sur l'arbre moteur 62 et susceptible d'assurer la transmission du mouvement de rotation de l'arbre moteur 62 avec un rapport de réduction déterminé. L'un des pignons référencé 613 sur la figure 6 et formant l'engrenage 61 est solidaire en mouvement d'un fourreau 63 mobile en rotation autour d'un axe Δ parallèle à la direction de commande de déplacement linéaire. Le fourreau 63 est en outre fixe en translation suivant cette direction par rapport au corps du système 60. Une tige de commande 64 de déplacement linéaire est vissée dans le fourreau 63 et entraînée en déplacement linéaire par le fourreau 63 lors de la rotation de celui-ci. Le corps de système et le fourreau peuvent par exemple être constitués en matière moulée, en matériau plastique par exemple, alors que la tige de commande 64 est de préférence une tige en métal. Le fourreau 63 comporte sur sa partie externe une roue dentée ou analogue sur laquelle est engrenée une transmission 66. La transmission 66 est montée de manière à entraîner l'axe de rotation d'un potentiomètre 67 constituant potentiomètre de recopie de position de l'arbre moteur 3. Ainsi qu'il apparaît en outre très clairement en figure 7, laquelle est une vue en coupe transversale selon un plan noté AA de la figure 6, l'axe de rotation du potentiomètre de recopie 67 est orthogonal à la direction Δ de commande de déplacement linéaire. Le fourreau comporte sur sa paroi interne une zone taraudée 630 dans laquelle la tige de commande 64 de déplacement linéaire est vissée. On remarquera notamment sur la figure 6, que la zone taraudée 630 ne recouvre pas toute la paroi interne du fourreau mais qu'elle est par exemple située en extrémité de celui-ci. En outre, cette zone taraudée 630 peut être disposée de manière sensiblement symétrique par rapport au plan AA de coupe précitée, ce plan étant orthogonal à la direction de commande de déplacement linéaire et contenant l'axe de rotation du potentiomètre de recopie 67. Cette disposition particulière a pour effet de réduire au minimum les effets de variation de températures susceptibles de provoquer des variations correspondantes de position du potentiomètre de recopie en raison d'une compensation quasi totale des variations dûes à la dilatation du fourreau compte tenu de la symétrie de la structure décrite par rapport à l'axe du potentiomètre. Naturellement, la longueur de la zone taraudée 630 peut être réduite au minimum de façon à cependant assurer une bonne transmission du mouvement de translation linéaire à la tige de commande 64 sans toutefois provoquer de modifications de dimension appréciable de cette zone taraudée en fonction de la température. Ainsi, les coefficients de dilatation linéaire des matériaux constituant le fourreau, matériau plastique, et la tige, métal, sont choisis dans un rapport dix, la tige étant constituée par exemple par un acier de coefficient de dilatation linéaire $\lambda = 1{,}2 \times 10^{-5}$ °C$^{-1}$ (valeur relative).

En outre, la tige de commande 64 comporte à l'extrémité opposée à l'extrémité de commande un bouton molleté 640 permettant par vissage de la tige 64 dans le fourreau un réglage de la position d'origine de la tige de commande. Enfin, la tige 64 comporte un ressort 68 de rattrappage de jeu solidaire du corps du système.

On a ainsi décrit avec un procédé et un dispositif de commande d'un moteur à courant continu un système de commande de déplacement linéaire de précision. Le système tel que précédemment décrit a permis après étude, le développement d'appareils capables d'assurer une précision en déplacement linéaire de 5 centième de millimètre pour une course totale de 10 millimètres. Les essais en température des appareils développés ont montré une très bonne tenue en température de ces derniers pour une plage de fonctionnement en températures comprise entre −30°C et +80°C.

## Revendications

1. Système de commande de déplacement linéaire comprenant un moteur à courant continu commandé dans une boucle d'asservissement de position dans laquelle un signal d'erreur de position est utilisé pour la commande, où il est formé en fonction du signal d'erreur une tension de commande ayant la forme d'une suite d'impulsions de période fixe et à rapport cyclique variable et dont la durée est dépendante de l'écart entre la position instantanée et la position d'arrêt du moteur en position finale théorique, caractérisé en ce qu'il comporte dans la chaîne directe de commande du moteur (3)

des moyens (5) générateurs desdites impulsions, ces impulsions ayant une valeur moyenne proportionnelle à l'écart entre la position instantanée de l'arbre moteur et la position d'arrêt du moteur en position finale théorique, ledit système comprenant en outre, dans un corps de système (60),

un train d'engrenages (61) en prise sur l'arbre moteur (62) et susceptible d'assurer la transmission du mouvement de rotation de l'arbre moteur avec un rapport de réduction déterminé,

un fourreau (63) solidaire en mouvement de l'un des pignons (613) formant l'engrenage (61), ledit fourreau (63) mobile en rotation autour d'un axe (Δ) parallèle à la direction de commande de déplacement linéaire étant fixe en translation suivant cette direction par rapport au corps du système (60),

une tige de commande (64) de déplacement linéaire vissée dans le fourreau (63) et entraînée en déplacement linéaire par le fourreau (63) lors de la rotation de celui-ci.

2. Système selon la revendication 1, caractérisé en ce que ledit fourreau sur sa partie externe comporte une roue dentée (65) sur laquelle est engrenée une transmission (66), la transmission (66) étant montée de manière à entraîner l'axe de rotation d'un potentiomètre (67) constituant potentiomètre de recopie de position de l'arbre du moteur (3), l'axe de rotation du potentiomètre de recopie étant orthogonal à la direction (Δ) de commande de déplacement linéaire.

3. Système selon la revendication 2, caractérisé en ce que le fourreau comporte sur sa paroi interne une zone taraudée (630) dans laquelle la tige de commande (64) de déplacement linéaire est vissée, ladite zone taraudée (630) étant sensiblement symétrique par rapport à un plan (AA) orthogonal à la direction (Δ) de commande de déplacement linéaire et contenant l'axe de rotation du potentiomètre de recopie (67).

4. Système selon l'une des revendications 1 à 3, caractérisé en ce que la tige de commande de déplacement linéaire (64) comporte à l'extrémité opposée à l'extrémité de commande, un bouton moleté (640) permettant par vissage de ladite tige (64) dans le fourreau (63) un réglage de la position d'origine de ladite tige de commande.

5. Système selon l'une des revendications 1 à 4, caractérisé en ce que, côté extrémité de commande de déplacement linéaire, ladite tige (64) comporte un ressort (68) de rattrapage de jeu solidaire du corps du système.

## Patentansprüche

1. Regelsystem zur linearen Verschiebung mit einem Gleichstrommotor, der in einem Positionsregelkreis gesteuert wird, bei dem für die Steuerung ein Positionsfehlersignal verwendet wird und wobei entsprechend dem Fehlersignal eine Steuerspannung erzeugt wird, die die Form einer Impulsfolge mit fester Periode und veränderlichem zyklischen Verhältnis hat und deren Dauer von dem Abstand zwischen der Momentanposition und der Ausschaltstellung des Motors in der theoretischen Endposition abhängig ist, dadurch gekennzeichnet, daß es in der direkten Befehlskette des Motors (3) folgendes enthält:
Mittel (5) zur Erzeugung der genannten Impulse, wobei diese Impulse einen mittleren Wert aufweisen, der sich proportional zum Abstand zwischen der Momentanposition der Motorwelle und der Ausschaltposition des Motors in der theoretischen Endstellung verhält und wobei das genannte System in einem Systemgehäuse (60) weiterhin folgendes enthält:
ein Zahnradvorgelege (61), welches mit der Motorwelle (62) in Eingriff steht und geeignet ist, die Übertragung der Drehbewegung von der Motorwelle mit einem bestimmten Untersetzungsverhältnis sicherzustellen,
ein Futter (63), welches in der Bewegung fest mit einem der Ritzel (613) verbunden ist, die das Vorgelege (61) bilden, wobei das Futter (63), welches um eine parallel zur Verschiebungsrichtung angeordnete Achse (Δ) drehbar angebracht ist, translatorisch entsprechend dieser Richtung im Verhältnis zum Systemgehäuse (60) befestigt ist,
eine Steuerstange (64) für lineare Verschiebung, die in das Futter (63) eingeschraubt und in der linearen Verschiebung bei der Rotation des Futters (63) von diesem angetrieben wird.

2. System nach Anspruch 1, dadurch gekennzeichnet, daß das genannte Futter am äußeren Teil ein Zahnrad (65) aufweist, mit welchem ein Getriebe (66) in Eingriff steht, wobei das Getriebe (66) so angebracht ist, daß dadurch die Rotationsachse eines Potentiometers (67) angetrieben wird, welches als Positionskopierpotentiometer für die Motorwelle (3) dient, wobei die Rotationsachse des Kopierpotentiometers orthogonal zur Steuerrichtung (Δ) für die lineare Verschiebung verläuft.

3. System nach Anspruch 2, dadurch gekennzeichnet, daß das Futter an der Innenwand eine Gewindezone (630) besitzt, in welche die Steuerstange (64) für die lineare Verschiebung eingeschraubt ist, wobei die genannte Gewindezone (630) sich im Verhältnis zu einer Ebene (AA), die orthogonal zur Steuerrichtung (Δ) für die lineare Verschiebung verläuft, symmetrisch verhält und die Rotationsachse des Kopierpotentiometers (67) enthält.

4. System nach einem der Ansprüche 1 bis 3, dadurch gekennzeichnet, daß die Steuerstange für die lineare Verschiebung (64) an dem dem Steuerende gegenüberliegenden Ende einen Rändelknopf (640) aufweist, der durch Einschrauben der genannten Stange (64) in das Futter (63) eine Regulierung der Ausgangsposition der genannten Steuerstange ermöglicht.

5. System nach einem der Ansprüche 1 bis 4, dadurch gekennzeichnet, daß die genannte Stange (64) auf der Seite des Steuerungsendes für die lineare Verschiebung eine Spielnachstellfeder (68) enthält, die fest mit dem Systemgehäuse verbunden ist.

## Claims

1. System for controlling linear displacement, said system comprising a DC motor in a position servocontrol loop in which a position error signal is used to control the motor, wherein, on the basis of the error signal, a control voltage is generated having the form of a sequence of pulses having a fixed period, a variable duty ratio, and a duration dependent on the difference between the instantaneous position of the motor shaft and the set stop position thereof, characterized in that said system comprises means located is the DC motor control chain (3);
pulse generator means (5), the pulses delivered by said pulse generator means having a mean value which is proportional to the instantaneous position of motor shaft and the set stop position thereof, said system further having is a body (60);
a gear train (61) meshing with the motor shaft (62) and suitable for transmitting rotation of the motor shaft at a predetermined step-down ratio;
a sleeve (63) fixed to rotate with one of the gear wheels (613) in said gear train, said sleeve being rotatable about an axis (Δ) which is parallel to the direction in which linear displacement is to be controlled and being fixed in translation along said direction relative to said body; and
a linear displacement control rod (64) screwed into said sleeve and driven in linear displacement by the sleeve when the sleeve (63) rotates.

2. A system according to claim 1, wherein said sleeve has a toothed wheel mounted on the outside thereof and meshing with a transmission which is mounted to rotate the axis of a potentiometer, said potentiometer constituting means for generating a signal representative of the position of the motor shaft, the axis of rotation of said potentiometer being orthogonal to the direction in which linear displacement is controlled.

3. A system according to claim 2, wherein the sleeve includes a tapped zone on its inside wall, with said linear displacement control rod being screwed into said tapped zone, said tapped zone being disposed substantially symmetrically about a plane which is orthogonal to the direction in which linear displacement is controlled and which contains the axis of rotation of said potentiometer.

4. A system according to any one of claims 1 to 3, wherein the linear displacement control rod has a first end whose position is controlled in linear displacement, and has an opposite, second end including a knurled knob enabling said rod to be screwed into said sleeve in order to adjust the position of the origin of said control rod.

5. A system according to any one of claims 1 to 4, wherein said control rod includes a first end whose position is controlled in linear displacement, and wherein a spring is disposed to act between said first end of the control rod and the body of the system in order to take up slack.

EP 0 186 596 B1

FIG-1

FIG-2

FIG-3a

FIG-3b

FIG-4

FIG-5a

FIG-5b

FIG-6

FIG-7